(19) Europäisches Patentamt
European Patent Office
Office européen des brevets

(11) **EP 1 687 774 B1**

(12) **EUROPEAN PATENT SPECIFICATION**

(45) Date of publication and mention
of the grant of the patent:
**01.10.2008 Bulletin 2008/40**

(51) Int Cl.:
***G06T 5/00*** (2006.01)

(21) Application number: **04798464.6**

(86) International application number:
**PCT/GB2004/004741**

(22) Date of filing: **10.11.2004**

(87) International publication number:
**WO 2005/048192 (26.05.2005 Gazette 2005/21)**

(54) **DIGITAL SIGNAL PROCESSING WITH IMPROVED MAPPING**

DIGITALSIGNALVERARBEITUNG MIT VERBESSERTER ABBILDUNG

TRAITEMENT DE SIGNAUX NUMERIQUES AVEC MAPPAGE AMELIORE

(84) Designated Contracting States:
**AT BE BG CH CY CZ DE DK EE ES FI FR GB GR HU IE IS IT LI LU MC NL PL PT RO SE SI SK TR**

(30) Priority: **10.11.2003 GB 0326167**

(43) Date of publication of application:
**09.08.2006 Bulletin 2006/32**

(73) Proprietor: **Metropolis Data Consultants Limited
Cambridge
Cambridgeshire CB3 0FD (GB)**

(72) Inventors:
• **HOBSON, Michael, P.
Cambridge CB4 1AQ (GB)**
• **MCLACHLAN, Charles I
Cambridge CB3 0XB (GB)**

(74) Representative: **Garratt, Peter Douglas et al
Mathys & Squire LLP
120 Holborn
London
EC1N 2SQ (GB)**

(56) References cited:
**WO-A-03/084207**

• HOBSON M P ET AL: "Combining cosmological data sets: hyperparameters and Bayesian evidence" MONTHLY NOTICES OF THE ROYAL ASTRONOMICAL SOCIETY BLACKWELL SCIENCE FOR R. ASTRON. SOC UK, vol. 335, no. 2, 11 September 2002 (2002-09-11), pages 377-388, XP002319477 ISSN: 0035-8711
• HOBSON M P ET AL: "A Bayesian approach to discrete object detection in astronomical data sets" MONTHLY NOTICES OF THE ROYAL ASTRONOMICAL SOCIETY BLACKWELL SCIENCE FOR R. ASTRON. SOC UK, vol. 338, no. 3, 21 January 2003 (2003-01-21), pages 765-784, XP002319476 ISSN: 0035-8711
• EISMANN M T ET AL: "Resolution enhancement of hyperspectral imagery using coincident panchromatic imagery and a stochastic mixing model" ADVANCES IN TECHNIQUES FOR ANALYSIS OF REMOTELY SENSED DATA, 2003 IEEE WORKSHOP ON 27-28 OCT. 2003, PISCATAWAY, NJ, USA,IEEE, 27 October 2003 (2003-10-27), pages 282-289, XP010701360 ISBN: 0-7803-8350-8

**Description**

The invention relates generally to the field of digital signal processing and, in a particular example, to a method for obtaining an improved enhancement of the signal through improved mapping between the signal parameters and a set of alternative optimisation parameters in terms of which the signal enhancement is performed.

In general, signal enhancement involves applying one or more operations to the signal to improve the signal quality, for example, sharpening improves signal details, noise reduction removes signal noise.

While these methods do indeed produce enhanced signals, the quality of the resulting signal often varies depending on the signal content. For example, a maximum a-posteriori probability algorithm may produce pleasing results for a signal that contains structure on only a narrow range of linear scales. However, using the same algorithm may result in the undesirable appearance of oscillatory artefacts when applied to a signal that contains both sharp and smooth features. For example, an image of a human face contains both sharp features (e.g. wrinkles, and eyelashes) and smooth features (e.g. the cheeks and forehead). In the enhanced image the sharp features may be surrounded by spurious oscillations that contaminate the smooth features.

In the enhancement of a digital signal, the digitised data stream may be denoted by a vector $\mathbf{d}$ containing $N_d$ components, where $N_d$ is the number of data samples. The data vector $\mathbf{d}$ may be expressed as some function $\phi$ of the true digital signal s that one wishes to enhance, i.e. $\mathbf{d} = \phi(s)$. The signal vector s has length $N_s$, where $N_s$ is the number of sample points at which the signal is estimated. The function $\phi$ can be non-linear and specifies the effect of the measuring apparatus on the signal. It is customary to consider the function $\phi$ in two parts: the predictable effect of the measuring apparatus on the signal $\boldsymbol{s}$; and the stochastic noise part due to inaccuracies in the measurement process. One may thus write

$$\mathbf{d} = R(\mathbf{s}) + \mathbf{n}, \qquad\qquad (1)$$

where $R$ denotes the predictable response of the apparatus to the signal and $\mathbf{n}$ is a vector of length $N_d$ containing any stochastic noise contributions to the data vector.

In prior art, there exist signal enhancement algorithms for performing signal sharpening, noise reduction and other operations (see, for example Titterington D. M., 1985, Astronomy & Astrophysics, 144, 381). These algorithms provide an estimate $\hat{s}$ of the underlying signal prior to its modification by the measuring apparatus and any addition of noise. The vector $\hat{s}$ is termed the enhanced digital signal.

As a result of correlations between the pixels in the underlying digital signal, the effective number of degrees of freedom in the signal enhancement problem can be much smaller than the number of parameters in the signal vector $\boldsymbol{s}$. This can lead to spurious artefacts and sub-optimal sharpening and noise reduction in the enhanced signal.

A number of approaches have been proposed to accommodate the problem of inter-pixel correlations. One approach (Gull S.F., 1989, in Skilling J., ed., Maximum Entropy and Bayesian Methods: Developments in Maximum Entropy Data Analysis, Dordrecht, pp 53-71) introduced the concept of an intrinsic correlation function (ICF) that is used to decorrelate the signal. The ICF framework has been extended to allow reconstructions of objects on different scales (see Weir N., 1992, in ASP Conf. Ser. 25: Astronomical Data Analysis Software and Systems I, Vol. 1, pp 186), proposing a multi-channel approach, which allows for multiple scales of pixel-to-pixel correlations. In a pyramidal approach (see Bontekoe T.R., Koper E., Kester D.J.M., 1994, Astronomy & Astrophysics, 284, 1037) the number of pixels retained in the low-resolution channels is decimated. Despite these improvements, choosing an ICF is not straightforward and employing suitable scale lengths and weights is of great importance. It is clear that there is no single set of ICFs that is universally optimal for all possible types of data.

Another Bayesian approach is described in Hobson M.P. et al.: "Combining cosmological data sets: hyperparameters and Bayesian evidence", Monthly Notices of the Royal Astronomical Society, UK, vol. 335, no. 2, 11 September 2002, pages 377-388, XP002319477 ISSN: 0035-8711. It is therein disclosed to use Bayesian inference for estimating the values of a set of parameters $\theta$ associated to a model which describes a measured phenomenon, this measure providing an initial measured data set $\boldsymbol{D}$. From a number of alternative models, an optimal one $H_0$ is determined by calculating the average of the Bayesian likelihood function $\Pr(\boldsymbol{D}|H_0)$ with respect to the prior $\Pr(\theta)$, this latter representing knowledge or prejudice regarding possible values of the model parameters. The model parameters $\theta$ are extended with hyperparameters $\alpha$ that are not present in the model a priori but allow extra freedom in the parameter estimation process, so that it can be determined whether the measured data sets are or are not mutually consistent.

Therefore, there remains a need to accommodate the problem of inter-pixel correlations in a way that is more broadly applicable.

Accordingly, in a first aspect of the invention, there is provided a method as set out in the appended claim 1 of performing a signal enhancement operation on a digital input signal to produce a best estimate of a true signal which the digital input signal is assumed to represent, comprising: a) deriving a plurality of candidate mappings, each candidate mapping defining a mapping between the signal domain of the digital input signal and an alternative optimisation domain, each signal in the signal domain corresponding to a set of optimisation parameters in the optimisation domain; b) for each candidate mapping, calculating an indicator of the quality of the candidate mapping, the calculation including analysing a distribution, defined over all possible sets of optimisation parameters in the optimisation domain of the candidate mapping, of the probabilities that given sets of optimisation parameters in the optimisation domain represent the true signal!; and generating a set of optimisation parameters in the optimisation domain of the candidate mapping, the set of optimisation parameters representing an enhanced signal in that domain; c) selecting the highest-quality mapping in dependence on the calculated indicators; d) selecting the set of optimisation parameters generated for the selected mapping; and e) applying the selected set of optimisation parameters to produce an enhanced digital signal in the signal domain. Further aspects and details of the invention are set out in the remaining claims.

In this way, a more efficient and/or effective signal enhancement process can be provided, in which the signal enhancement operation and the selection of the mapping are preferably performed in a single process or search (they are, in essence, performed simultaneously). This can allow the selection of the mapping to be made dependent on the enhancement of the digital signal achievable using the various candidate mappings, for example by making the calculation of the quality indicator dependent on the generation of the enhanced signal.

Preferably, the mapping selection step selects the best (or highest-quality) mapping for representing the enhanced signal (rather than the best mapping for representing the digital input signal). Thus, an enhanced signal can be provided which is optimally represented in terms of the selected mapping.

The quality indicator preferably relates to the quality of signal enhancement which is achievable using a given candidate mapping. Preferably, calculation of the quality indicator for a candidate mapping is dependent on the enhanced signal generated for that candidate mapping (in the form of the generated set of optimisation parameters in the optimisation domain of that candidate mapping), and calculating the quality indicator preferably comprises generating the set of optimisation parameters representing the enhanced signal.

The selection of a mapping may also be referred to as basis selection (that is, the selection of a basis set for representation of the enhanced signal). The invention can then be considered to provide a method of performing a signal enhancement operation in which the enhancement of the signal and the optimal basis selection are performed simultaneously so as to produce an enhanced signal that is optimally represented in terms of the chosen basis set. The signal enhancement operation may, for example, be image reconstruction.

The quality indicator is preferably calculated by evaluating a mapping quality function which provides an indication of the quality of a given candidate mapping. Evaluating the mapping quality function may comprise performing the signal enhancement operation, preferably so as to generate the set of optimisation parameters representing an enhanced signal.

Preferably, generating a set of optimisation parameters representing an enhanced signal in the optimisation domain of a given candidate mapping comprises performing a search through the space of possible sets of optimisation parameters in that domain. Performing a search preferably comprises optimising the set of optimisation parameters with respect to a quality measure indicating the quality of an enhanced signal represented by any given set of optimisation parameters. In this way, an efficient signal enhancement process may be provided. Also, the selection of the mapping can be made dependent on the quality of signal enhancement achievable using the mapping, which can lead to the selection of a better mapping and hence to an improvement in the signal enhancement achieved.

The quality measure preferably comprises a measure of the probability that a given set of optimisation parameters represents, in the optimisation domain, the true signal. In this way, a more reliable quality measure can be provided. For efficiency, the search is preferably performed in accordance with a numerical optimisation algorithm.

Advantageously, calculating an indicator of the quality of a candidate mapping may comprise analysing a probability distribution of the probabilities that given sets of optimisation parameters in the optimisation domain of the candidate mapping represent the true signal. In this way, the selection of the mapping can be improved, which can lead to improved signal enhancement results. Preferably, generating a set of optimisation parameters representing an enhanced signal comprises calculating at least an estimate of the set of optimisation parameters having the highest probability of representing, in the optimisation domain of the candidate mapping, the true signal. The quality of image enhancement achieved by the process can thereby be improved.

Calculating a quality indicator preferably comprises calculating a Bayesian evidence function.

In a further aspect of the invention, there is provided a method of processing a digital input signal, comprising the steps of: selecting a mapping between the signal domain of the digital input signal and an alternative optimisation domain in dependence on the digital input signal; deriving an alternative signal representation from the digital input signal using the selected mapping; and performing a signal processing operation on the alternative signal representation; and wherein the mapping is selected from a plurality of candidate mappings by evaluating a Bayesian evidence function which provides an indication of the quality of a given candidate mapping.

By using a Bayesian evidence function, the mapping selection may be improved, which may lead to improved signal processing results. The Bayesian evidence function preferably at least estimates the Bayesian evidence of the digital input signal given a particular candidate mapping. The Bayesian evidence can provide a more reliable measure of the quality of a given candidate mapping. The Bayesian evidence may be calculated or estimated depending on efficiency considerations and required accuracy.

Preferably, each signal in the signal domain corresponds to a set of optimisation parameters in the optimisation domain, and the Bayesian evidence function estimates or calculates the Bayesian evidence using: a likelihood function describing the probability of obtaining the digital input signal given any particular set of values for the optimisation parameters, given the particular candidate mapping; and a prior probability function describing the prior probability of the occurrence of any particular set of values for the optimisation parameters, given the particular candidate mapping; the prior probability function codifying prior knowledge of the distribution of values for the optimisation parameters in advance of analysis of the digital input signal. The Bayesian evidence function preferably estimates or calculates the Bayesian evidence by estimating or calculating the integral of the product of the likelihood function and the prior probability function over all sets of optimisation parameters in the optimisation domain of the candidate mapping.

The Bayesian evidence function preferably provides, or forms part of, a mapping quality function which provides an indication of the quality of a given candidate mapping.

Preferably, the plurality of candidate mappings are defined by a set of one or more mapping parameters; and the mapping is selected by optimising the mapping quality function, the quality indicator or the Bayesian evidence function as a function of the mapping parameters. In this way, the mapping may be selected more efficiently.

The mapping parameters may be discrete and act as labels for a set of pre-defined mappings. This may provide an efficient mapping selection process. Alternatively, the candidate mappings may be defined by a continuously parameterisable mapping function. In this way, a wider range of mappings can be provided, which can lead to the selection of a more suitable mapping and hence to improved image processing or enhancement results,

The mapping is preferably selected in dynamic dependence on the signal, or in dynamic dependence on a defined unit of the signal. The digital input signal may, for example, be an image or a portion of an image, in which case the mapping is preferably selected in dependence on the image or the portion.

The candidate mappings may be general non-linear functions, or may be linear functions. The optimisation parameters may, for example, be coefficients of sinusoidal functions; coefficients of wavelet functions; coefficients of Gaussian functions; coefficients of top-hat functions; coefficients of signal-to-noise eigenfunctions of the input signal; or coefficients of continuous parameterisable functions that vary continuously between two or more standard forms.

The signal processing or enhancement operation may, for example, be sharpening; noise reduction; tone scale adjustment; intensity balance adjustment; colour balance adjustment; colour re-mapping; de-blocking or image magnification employing interpolation.

The invention also provides a computer program product for performing a signal processing operation, comprising a computer usable medium storing a computer program which, when executed, causes a processor to perform a method as described herein; and digital signal processing apparatus adapted to perform a method as described herein.

In a further aspect of the invention, there is provided digital signal processing apparatus for processing a digital input signal, comprising: means for selecting a mapping between the signal domain of the digital input signal and an alternative optimisation domain in dependence on the digital input signal; means for deriving an alternative signal representation from the digital input signal using the selected mapping; and means for performing a signal processing operation on the alternative signal representation; wherein the selecting means is adapted to select the mapping from a plurality of candidate mappings using a mapping quality function which provides an indication of the quality of a given candidate mapping; wherein the plurality of candidate mappings are defined by a continuously parameterisable mapping function of a set of one or more mapping parameters; and wherein the selecting means is adapted to select the mapping by optimising the mapping quality function as a function of the mapping parameters. In this way, a wider range of mappings can be provided, which can lead to the selection of a more suitable mapping and hence to improved image processing results.

In a further aspect of the invention, there is provided digital signal processing apparatus for performing a signal enhancement operation on a digital input signal represented by signal parameters, comprising means for processing the digital input signal to determine the optimal mapping between the signal parameters and a set of optimisation parameters; and means for utilising said optimal mapping in the signal enhancement operation; the optimal mapping being selected from a plurality of candidate mappings in dependence on a measure of the quality of signal enhancement achievable by applying the signal enhancement operation to the digital input signal using a given candidate mapping. In this way, a more suitable mapping can be selected which can lead to improved signal enhancement results.

The digital signal processing apparatus preferably further comprises means for determining the quality measure by evaluation of a mapping quality function of a set of mapping parameters; and means for obtaining an optimum mapping by optimisation of the mapping quality function as a function of the mapping parameters. The mapping quality function is preferably a Bayesian evidence function as described above. The digital signal processing apparatus preferably comprises means for performing any of the methods described herein.

In certain aspects, the present invention can have the advantage that the correlation structure of the signal itself can determine the mapping between the signal parameters and the optimisation parameters in terms of which the signal enhancement is performed. The mapping can provide an efficient means for representing the information content of the signal. By performing the enhancement of the signal entirely in terms of optimisation parameters connected to the signal parameters by the optimal mapping, an enhanced signal can be obtained in which the sharpening and noise reduction (for example) are substantially improved and the presence of spurious artefacts is greatly reduced.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:-

Figure 1 is a flowchart illustrating one embodiment of the present invention;

Figure 2 is a flowchart illustrating a second embodiment of the present invention; and

Figure 3 is a block diagram showing a computer system for use with a software implementation of the present invention.

In the following description, the present invention will be described as a method implemented as a software program. Those skilled in the art will readily recognise that the equivalent of such software may also be constructed in hardware. Because signal enhancement algorithms and methods are well known, the present description will be directed in particular to algorithm and method steps forming part of, or cooperating more directly with, the method in accordance with the present invention. Other parts of such algorithms and methods, and hardware and/or software for producing and otherwise processing the signal, not specifically shown or described herein, may be selected from such subject matters, components, and elements known in the art. Given the description as set forth in the following specification, all software implementation thereof is conventional and within the ordinary skill in such arts.

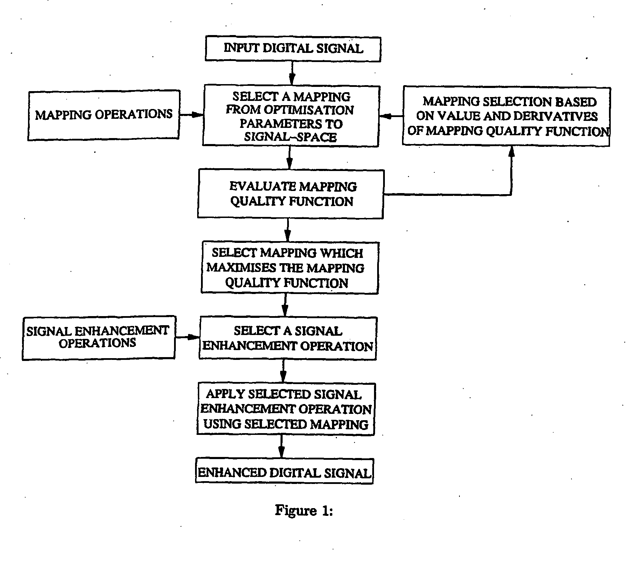

Fig. 1 illustrates a preferred embodiment of the present invention for processing a signal with a specific signal processing path in order to obtain an enhanced output signal. In general, the present invention performs an enhancement operation to a signal by describing the signal in terms of a set of alternative optimisation parameters, determining the optimal mapping between the signal parameters and optimisation parameters; and performing the signal enhancement in terms of the optimisation parameters.

Referring to Fig. 1, there is shown a block diagram of the present invention. An input digital signal **d** is obtained. Next, a mapping is selected between the space of optimisation parameters **h** and the signal parameters **s.** This mapping may be expressed by the equation s = $K(\mathbf{h};\mathbf{p})$, where $K$ is a function determining the mapping, the form of which may depend on a set of subsidiary mapping parameters **p.** Next, the mapping quality function Q is evaluated. The value of the mapping quality function, possibly together with its higher derivatives as a function of the mapping parameters **p**, may then be used to guide the selection of new mappings. Next, from those values of the mapping parameters **p** employed, the values of **p** that yield the largest value of the mapping quality function are selected as the optimal mapping parameters $\hat{\mathbf{p}}$. The corresponding mapping s = $K(\mathbf{h};\hat{\mathbf{p}})$ is then selected as the optimal mapping. Employing this optimal mapping, the signal enhancement problem now takes the form

$$\mathbf{d} = R(K(\mathbf{h};\hat{\mathbf{p}})) + \mathbf{n}.$$

This equation may be recast in the standard form for a signal enhancement problem by defining the optimal response

function $\hat{R}$ as the composite of the optimal mapping function $K$ and the original response function $R$ , thus $\hat{R}(\mathbf{h}) \equiv R(K(\mathbf{h};\hat{\mathbf{p}}))$. The signal enhancement problem can therefore be written as

$$d = \hat{R}(\mathbf{h}) + \mathbf{n}, \qquad (2)$$

which is directly analogous to equation (1), but is cast entirely in terms of the optimisation parameters $\mathbf{h}$ and the optimal response function $\hat{R}$. Next, a signal enhancement operation is selected and applied to the signal enhancement problem defined by equation (2). The output of the signal enhancement operation will be a set of enhanced values $\hat{\mathbf{h}}$ for the optimisation parameters. Finally, the output enhanced digital signal $\hat{s}$ is obtained by applying the optimal mapping function to the optimisation parameters, thus $\hat{s} = K(\hat{\mathbf{h}};\hat{\mathbf{p}})$.

Referring to Fig. 1, the mapping operation may be entirely general, so that the signal parameters s are some non-linear function of the optimisation parameters $\mathbf{h}$. The mapping parameters $\mathbf{p}$ may be continuous and describe a continously parameterisable mapping $K$. Alternatively, the mapping parameters $\mathbf{p}$ may be discrete and act as labels for a set of pre-defined mappings.

In a preferred embodiment, the mapping between the signal parameters s and the optimisation parameters $\mathbf{h}$ is linear. In this case, the operation of the mapping $K$ can be expressed in terms of a mapping matrix $\mathbf{K}$ , so that the signal parameters $s$ may be expressed as $s = K(\mathbf{p}) \cdot \mathbf{h}$, where denotes the operation of matrix multiplication. This expression may be interpreted as the signal being a linear combination of the set of digitised basis vectors that make up the columns of the matrix $\mathbf{K}$ , with the optimisation parameters $\mathbf{h}$ acting as the coefficients in the linear combination.

Examples of the form of the digitised basis vectors include: sinusoidal functions, wavelet functions, Gaussian functions, top-hat functions, and signal-to-noise eigenfunctions. In the case in which the mapping parameters $\mathbf{p}$ are discrete, they may act as labels for sets of pre-defined basis vectors. In the case in which the mapping parameters $\mathbf{p}$ are continuous, they may act as controlling parameters for the form of some continously parameterisable function that defines the shape of the digitised basis vectors. A specific example of a useful continously parameterisable function is that described by the equation

$$f(x) = A\left[1 + \frac{1}{n}\left(\frac{x^2}{x_0^2}\right)^{m/2}\right]^{-n},$$

in which the parameters $A$ and $x_0$ determine respectively the amplitude and width of the basis function, and by varying the values of the indices $m$ and $n$, the form of the function varies continuously and includes the specific forms of a top-hat, a Gaussian and a Lorentzian.

Returning to Fig. 1, once a mapping, and hence the values of the mapping parameters $\mathbf{p}$, has been chosen one must calculate the value of a mapping quality function $Q(\mathbf{p})$. This function may, in general, take any form. In any particular signal enhancement problem, whatever requirements exist on the properties of the final enhanced signal $\hat{s}$ may be used to determine the nature of $Q$. The form of $Q$ is chosen so that a final enhanced signal which more closely satisfies the requirements yields a larger value of $Q$. As an example, the value of $Q$ may be defined so that a large value indicates the presence of fewer ringing artefacts in the enhanced signal.

In a preferred embodiment, the quality mapping function $Q(\mathbf{p})$ will be the Bayesian evidence $\Pr(\mathbf{d}|H)$ of the input signal given the mapping adopted. The Bayesian evidence may be calculated using the equation

$$\Pr(\mathbf{d} \mid H) = \int_{\text{all }\mathbf{h}} \Pr(\mathbf{d} \mid \mathbf{h}, H)\Pr(\mathbf{h} \mid H)\, d\mathbf{h}.$$

In this equation the likelihood function $\Pr(\mathbf{d}|\mathbf{h},H)$ describes the probability of obtaining the input data signal given any particular set of values for the optimisation parameters. For example, when the input signal is an image, the likelihood function encodes a model for the imaging process by encoding both the deterministic properties of the imaging instrument, for example its point spread function, and the stochastic part of the imaging process, most notably the statistical properties of the noise introduced into the image. For example, a standard Gaussian likelihood function may be used.

The prior $\Pr(\mathbf{h}|H)$ codifies prior knowledge of the distribution of values for the optimisation parameters in advance of analysis of the data. In the example of image signals, the prior encodes any knowledge or prejudice regarding the form of the image, before analysis of the data. For example, most images are non-negative and this may be included as a simple prior. In practice, an information-theoretic prior is preferably used, most notably the maximum-entropy prior (and generalisations thereof).

More specifically, the hypothesis $H$ denotes the totality of assumptions regarding the signal enhancement problem and includes, for example, the assumed form of the response function $R$ , and the assumed statistical properties of the noise contribution **n.** Most importantly, the hypothesis $H$ also includes the mapping $K$ used to relate the signal parameters s and the optimisation parameters **h.** Thus the hypothesis $H$ depends upon the mapping parameters **p**, and we may take the mapping quality function to be $Q(\mathbf{p}) \equiv \Pr(\mathbf{d}|H(\mathbf{p}))$.

The practical evaluation of the evidence for any given set of mapping parameters p can be computationally prohibitive for signal enhancement problems in which the number of optimisation parameters is large. In such cases, two complementary techniques in the prior art can be used to obtain an approximate value for the evidence. The first technique is to take samples from the distribution $\Pr(\mathbf{d}|\mathbf{h},H)\Pr(\mathbf{h}|H)$ such that the number density of samples is proportional to the probability density of the distribution, possibly raised to some power. These samples can then be used to obtain an estimate of the evidence (see, for example, Gilks et al., 1995, Markov Chain Monte-Carlo in Practice, Chapman and Hall, New York). The second technique employs a numerical optimiser to locate the maximum $\hat{\mathbf{h}}$ of the distribution Pr $(\mathbf{d}|\mathbf{h}, H) \Pr(\mathbf{h}|H)$. The curvature matrix of the distribution is then calculated at the maximum point, and used to define a multivariate Gaussian approximation to the distribution. The corresponding volume of this multivariate Gaussian approximation can be calculated using Monte-Carlo evaluation of the curvature matrix determinant and yields an estimate of the evidence (see, for example, Hobson et.al., 2002, Monthly Notices of the Royal Astronomical Society, 335, 377).

Returning to Fig. 1, alternatively or additionally, the signal enhancement operation may be noise reduction, de-blocking, scene balance adjustment, tone scale adjustment, colour re-mapping, signal interpolation, signal sharpening or any other operations with which one or more attributes of a signal can be enhanced.

In a preferred embodiment, the signal enhancement will be performed using the maximum a posteriori probability algorithm (see, for example Titterington, 1985). The optimal values of the optimisation parameters $\hat{\mathbf{h}}$ are taken to be those which maximise the joint probability distribution $\Pr(\mathbf{h},\mathbf{d}|H)$, which is given by the equation

$$\Pr(\mathbf{h},\mathbf{d} \mid H) = \Pr(\mathbf{d} \mid \mathbf{h}, H)\Pr(\mathbf{h} \mid H).$$

The likelihood function $\Pr(\mathbf{d}|\mathbf{h},H)$ and prior $\Pr(\mathbf{h}|H)$ are as described above. In the prior art, it is usual to define the log-likelihood function $L(\mathbf{h})$ such that $\Pr(\mathbf{d}|\mathbf{h},H) = \exp[L(\mathbf{h})]$. and the regularising function $S(\mathbf{h})$ such that $\Pr(\mathbf{h}|H) = \exp[S(\mathbf{h})]$. The enhanced signal $\hat{\mathbf{h}}$ is then that which maximises with respect to **h** the objective function

$$F(\mathbf{h}) = L(\mathbf{h}) + S(\mathbf{h}).$$

The location of the maximum point is determined using a numerical optimisation algorithm.

If the signal enhancement is performed using the maximum a posteriori probability algorithm, then this solution will already have been obtained in the step in which the approximate value of the Bayesian evidence is calculated using a multivariate Gaussian approximation, and so the formal signal enhancement step can be avoided, thereby speeding up the process.

A preferred application of the present invention is to the enhancement of a digital image **d.** Such an image may have been subjected to some de-sharpening by the imaging apparatus, denoted by the response mapping $R$, and also contain additional noise **n** resulting from inaccuracies in the imaging process. The goal of the image enhancement procedure is to obtain an enhanced image $\hat{\mathbf{s}}$ that is a better representation of the original scene s being imaged, by sharpening and de-noising the data image **d.**

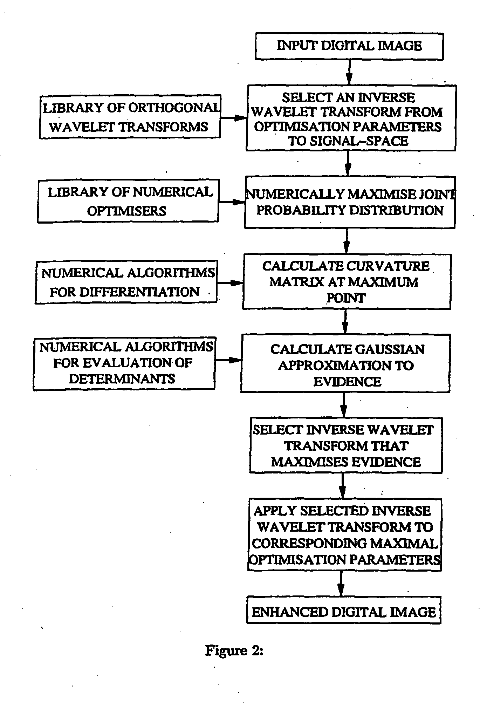

A specific illustration of how the present invention may be applied to this image enhancement problem is shown in Fig. 2.

Referring to Fig. 2, in this illustration the mapping parameters **p** are chosen to be discrete and act as labels for a set of pre-defined mappings. Each mapping is chosen to be linear such that $\mathbf{s} = \mathbf{K(p) \cdot h,}$ where the symbol · denotes the operation of matrix multiplication. The specific example of such a pre-defined set of mappings **K ,** as illustrated in Fig. 2, is a library of two-dimensional orthogonal inverse wavelet transforms, each based on a different mother wavelet. In each case, the optimisation parameters **h** are then the coefficients of the corresponding digitised wavelet basis functions.

For each wavelet transform from the library, corresponding to a different value for a single discrete mapping parameter $p$, one then calculates the quality mapping function $Q(\mathbf{p}) \equiv \Pr(\mathbf{d}|H(p))$ based on the Bayesian evidence. In the image enhancement application, it is preferable to estimate this quantity by employing a numerical optimiser to locate

the maximum $\hat{\mathbf{h}}$ of the distribution $\Pr(\mathbf{d}|\mathbf{h},H)\Pr(\mathbf{h}|H)$, and then calculate the curvature matrix of the distribution at this maximum point to define a multivariate Gaussian approximation to the distribution. The numerical maximisation of $\Pr(\mathbf{d}|\mathbf{h},H)\Pr(\mathbf{h}|H)$ can be performed using standard optimisation algorithms, such as the conjugate-gradient, variable-metric or quasi-Newton techniques, or some hybrid method. The curvature matrix $\mathbf{M}$ at the maximum can be approximated by calculating numerical second differences of the distribution. The volume of the corresponding multivariate Gaussian then gives an approximate value for the evidence,

$$\Pr(\mathbf{d}|H(p)) \approx (2\pi)^{N_h/2}|\mathbf{M}|^{-1/2}\Pr(d|\hat{\mathbf{h}},H)\Pr(\hat{\mathbf{h}}|H),$$

where $N_h$ is the number of optimisation parameters. The determinant of the curvature matrix $|\mathbf{M}|$ in the above expression can be evaluated using a Monte-Carlo technique.

The wavelet transform $\mathbf{K}(\hat{p})$ from the library that yields the largest value of $\Pr(\mathbf{d}|H(p))$ is chosen as the required optimal mapping.

Returning to Fig. 2, in the preferred embodiment, the image enhancement will be performed using the maximum a posteriori probability algorithm. The optimal values of the optimisation parameters $\hat{\mathbf{h}}$, corresponding to the optimal mapping, are taken to be those which maximise the probability distribution $\Pr(\mathbf{d}|\mathbf{h},H)\Pr(\mathbf{h}|H)$. These values will already have been obtained in the step in which the approximate value of the Bayesian evidence is calculated using a multivariate Gaussian, and so the final enhanced image is immediately obtained as $\mathbf{s}=\mathbf{K}(\hat{p})\cdot\hat{\mathbf{h}}$.

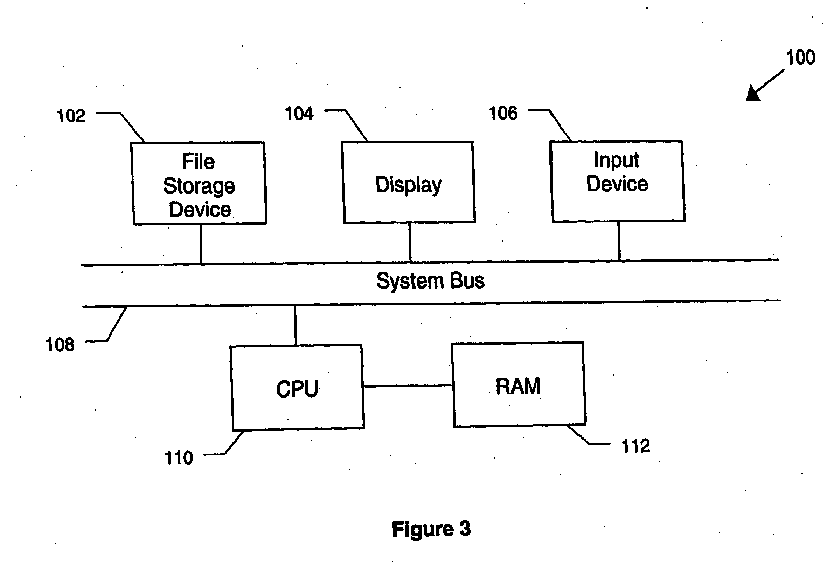

The present invention may be implemented as computer software for execution on a general purpose computer system, in the form of dedicated processing circuitry, or as a combination of hardware and software. An example of a computer system for use with a software implementation of the present invention is illustrated in Figure 3.

The computer system 100 comprises a central processing unit (CPU) or processor 110 connected to a Random Access Memory (RAM) 112 via a memory bus, and to a system bus 108. The memory 112 may alternatively or additionally be connected directly to system bus 108. Also connected to the system bus 108 are a file storage device 102 (such as a hard disk drive), a display 104 and one or more input devices 106 (such as a keyboard and/or mouse).

Executable program code embodying the invention may be stored in file storage device 102 and is loaded into memory 112 on startup of the program, from where it is executed by processor 110.

Signal data, such as a digital image, is also stored in file storage device 102. Under control of the program executing on processor 110, the digital image is loaded into memory 112 and processed in accordance with the invention, for example by carrying out an image enhancement operation as described above. Further data required for the image enhancement operation, such as the library of wavelet transforms described above with reference to Figure 2, may be stored in file storage device 102 and accessed when required.

The enhanced image produced by the operation of the program can be stored in file storage device 102 and/or displayed to an operator on display 104, depending on the intended use of the program.

For example, in an interactive mode, the operation of the program may be controlled by an operator using input device 106, with the results displayed on display 104. Alternatively, the program may operate in a batch mode, processing image files stored in file storage device 102 and writing the resulting enhanced image files back to the storage device.

The subject matter of the present invention relates to digital signal processing technology, and in a preferred form provides technology that digitally processes a digital image to determine the optimal mapping between the signal parameters and a set of optimisation parameters and then utilises the results obtained in the further processing of the digital signal.

In other forms of the invention, there is provided a method for processing a digital signal, comprising the steps of: describing the signal values as functions of a set of alternative optimisation parameters; selecting a mapping between the signal parameters and the optimisation parameters; determining the quality of the mapping by evaluation of a mapping quality function of a set of mapping parameters; obtaining an optimum mapping by maximisation of the mapping quality function as a function of the mapping parameters; providing a signal enhancement operation performed entirely in terms of the optimisation parameters; and applying signal enhancement to the digital signal using the optimal mapping to produce an enhanced signal.

There is also provided a method of processing a digital signal, comprising the steps of selecting a mapping between the signal domain and an alternative optimisation domain in dynamic dependence on the signal; deriving an alternative signal representation from the digital signal using the selected mapping; and performing a signal processing operation on the alternative signal representation.

In this context, the signal domain is the domain of the signal parameters or signal values. The alternative signal representation is preferably in the form of a set of optimisation parameters as previously described. The optimisation domain is then preferably the domain of the optimisation parameters, in which the signal processing operation is performed.

The term "in dynamic dependence on" preferably means in dependence on an appropriate unit of the signal, with a mapping being selected for each such unit. For example, in an image processing application, the mapping is preferably selected in dynamic dependence on an image represented by the signal. Alternatively, it may be selected in dynamic dependence on a block of pixels within an image, for example a block of eight by eight or thirty-two by thirty-two pixels. Other block sizes may, of course, be used.

Advantageously, the mapping is selected from a plurality of candidate mappings by evaluating and preferably optimising or maximising a mapping quality function which provides an indication of the quality of a given candidate mapping.

The present invention may be implemented for example in a computer program product. A computer program product may include one or more storage media, for example, magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice a method according to the present invention.

It will be understood that the present invention has been described above purely by way of example, and modification of detail can be made within the scope of the invention.

**Claims**

1. A method of performing a signal enhancement operation on a digital input signal to produce a best estimate of a true signal which the digital input signal is assumed to represent, comprising:

   a) deriving a plurality of candidate mappings ($K(h;p)$), each candidate mapping defining a mapping between the signal domain (d) of the digital input signal and an alternative optimisation domain (h), each signal in the signal domain corresponding to a set of optimisation parameters in the optimisation domain;
   b) for each candidate mapping, calculating an indicator of the quality of the candidate mapping ($Q(p)$), the calculation including analysing a distribution, defined over all possible sets of optimisation parameters in the optimisation domain of the candidate mapping, of the probabilities that given sets of optimisation parameters in the optimisation domain represent the true signal; and generating a set of optimisation parameters in the optimisation domain of the candidate mapping, the set of optimisation parameters representing an enhanced signal in that domain;
   c) selecting the highest-quality mapping in dependence on the calculated indicators;
   d) selecting the set of optimisation parameters ($\hat{h}$) generated for the selected mapping; and
   e) applying the selected set of optimisation parameters to produce an enhanced digital signal in the signal domain.

2. A method according to Claim 1, wherein calculation of the quality indicator is dependent on the generation of the set of optimisation parameters representing an enhanced signal.

3. A method according to Claim 1 or 2, wherein generating a set of optimisation parameters representing an enhanced signal in the optimisation domain of a given candidate mapping comprises performing a search through the space of possible sets of optimisation parameters in that domain.

4. A method according to Claim 3, wherein performing a search comprises optimising the set of optimisation parameters with respect to a quality measure indicating the quality of an enhanced signal represented by any given set of optimisation parameters.

5. A method according to Claim 4, wherein the quality measure comprises a measure of the probability that a given set of optimisation parameters represents, in the optimisation domain, the true signal.

6. A method according to any of Claims 3 to 5, wherein the search is performed in accordance with a numerical optimisation algorithm.

7. A method according to any of the preceding claims, wherein generating a set of optimisation parameters representing an enhanced signal comprises calculating at least an estimate of the set of optimisation parameters having the highest probability of representing, in the optimisation domain of the candidate mapping, the true signal.

8. A method according to any of the preceding claims, wherein calculating a quality indicator comprises calculating a Bayesian evidence function.

9. A method according to Claim 8, wherein the Bayesian evidence function at least estimates the Bayesian evidence of the digital input signal given a particular candidate mapping.

10. A method according to Claim 9, wherein each signal in the signal domain corresponds to a set of optimisation parameters in the optimisation domain, and wherein the Bayesian evidence function estimates or calculates the Bayesian evidence using:

    a likelihood function describing the probability of obtaining the digital input signal given any particular set of values for the optimisation parameters, given the particular candidate mapping; and
    a prior probability function describing the prior probability of the occurrence of any particular set of values for the optimisation parameters, given the particular candidate mapping; the prior probability function codifying prior knowledge of the distribution of values for the optimisation parameters in advance of analysis of the digital input signal.

11. A method according to Claim 10, wherein the Bayesian evidence function estimates or calculates the Bayesian evidence by estimating or calculating the integral of the product of the likelihood function and the prior probability function over all sets of optimisation parameters in the optimisation domain of the candidate mapping.

12. A method according to any of the preceding claims, wherein the plurality of candidate mappings are defined by a set of one or more mapping parameters; and wherein the mapping is selected by optimising the quality indicator or the Bayesian evidence function as a function of the mapping parameters.

13. A method according to Claim 12, wherein the mapping parameters are discrete and act as labels for a set of pre-defined mappings.

14. A method according to any of the preceding claims, wherein the candidate mappings are defined by a continuously parameterisable mapping function.

15. A method according to any of the preceding claims, wherein the mapping is selected in dynamic dependence on the signal.

16. A method according to any of the preceding claims, wherein the digital input signal is an image or a portion of an image, and wherein the mapping is selected in dependence on the image or the portion.

17. A method according to any of the preceding claims, wherein the candidate mappings are general non-linear functions.

18. A method according to any of claims 1 to 16, wherein the candidate mappings are linear functions.

19. A method according to any of the preceding claims, wherein optimisation parameters in the optimisation domain are selected from the group consisting of coefficients of sinusoidal functions; coefficients of wavelet functions; coefficients of Gaussian functions; coefficients of top-hat functions; coefficients of signal-to-noise eigenfunctions of the input signal; and coefficients of continuous parameterisable functions that vary continuously between two or more standard forms.

20. A method according to any of the preceding claims, wherein the signal processing or enhancement operation is selected from the group consisting of sharpening; noise reduction; tone scale adjustment; intensity balance adjustment; colour balance adjustment; colour re-mapping; de-blocking; and image magnification employing interpolation.

21. A computer program product for performing a signal processing operation, comprising a computer usable medium storing a computer program which, when executed, causes a processor to perform a method as claimed in any of the preceding claims.

22. Digital signal processing apparatus adapted to perform a method as claimed in any of Claims 1 to 20:

23. Digital signal processing apparatus for processing a digital input signal, comprising:

means for selecting a mapping (K(h;p)) between the signal domain (d) of the digital input signal and an alternative optimisation domain (h) in dependence on the digital input signal;

means for deriving an alternative signal representation from the digital input signal using the selected mapping; and

means for performing a signal processing operation on the alternative signal representation;

wherein the selecting means is adapted to select the mapping from a plurality of candidate mappings using a mapping quality function (Q(p)) which provides an indication of the quality of a given candidate mapping;

wherein the plurality of candidate mappings are defined by a continuously parameterisable mapping function of a set of one or more mapping parameters; and

wherein the selecting means is adapted to select the mapping by optimising the mapping quality function as a function of the mapping parameters.

**24.** Digital signal processing apparatus according to Claim 23, wherein the mapping quality function is a Bayesian evidence function.

## Patentansprüche

**1.** Verfahren zum Ausführen einer Signalverbesserungsoperation an einem digitalen Eingangssignal, um eine beste Schätzung eines wahren Signals, von dem angenommen wird, dass es das digitale Eingangssignal repräsentieren soll, zu erzeugen, wobei das Verfahren umfasst:

a) Ableiten mehrerer Kandidatenabbildungen (K(h, p)), wobei jede Kandidatenabbildung eine Abbildung zwischen dem Signalbereich (d) des digitalen Eingangssignals und einem alternativen Optimierungsbereich (h) definiert, wobei jedes Signal in dem Signalbereich einer Menge von Optimierungsparametern in dem Optimierungsbereich entspricht;

b) für jede Kandidatenabbildung Berechnen eines Indikators der Qualität der Kandidatenabbildung (Q(p)), wobei das Berechnen das Analysieren einer über allen möglichen Mengen von Optimierungsparametern in dem Optimierungsbereich der Kandidatenabbildung definierten Verteilung der Wahrscheinlichkeiten, dass gegebene Mengen von Optimierungsparametern in dem Optimierungsbereich das wahre Signal repräsentieren, enthält; und Erzeugen einer Menge von Optimierungsparametern in dem Optimierungsbereich der Kandidatenabbildung,

wobei die Menge von Optimierungsparametern ein verbessertes Signal in diesem Bereich repräsentiert;

c) Auswählen der Abbildung mit höchster Qualität in Abhängigkeit von den berechneten Indikatoren;

d) Auswählen der Menge von Optimierungsparametern (h), die für die ausgewählte Abbildung erzeugt wird; und

e) Anwenden der ausgewählten Menge von Optimierungsparametern, um ein verbessertes digitales Signal in dem Signalbereich zu erzeugen.

**2.** Verfahren nach Anspruch 1, wobei die Berechnung des Qualitätsindikators von der Erzeugung der Menge von Optimierungsparametern, die ein verbessertes Signal repräsentieren, abhängt.

**3.** Verfahren nach Anspruch 1 oder 2, wobei das Erzeugen einer Menge von Optimierungsparametern, die ein verbessertes Signal in dem Optimierungsbereich einer gegebenen Kandidatenabbildung repräsentieren, das Ausführen einer Suche in dem Raum möglicher Mengen von Optimierungsparametern in diesem Bereich umfasst.

**4.** Verfahren nach Anspruch 3, wobei das Ausführen einer Suche das Optimieren der Menge von Optimierungsparametern in Bezug auf ein Qualitätsmaß, das die Qualität eines durch irgendeine gegebene Menge von Optimierungsparametern repräsentierten verbesserten Signals angibt, umfasst.

**5.** Verfahren nach Anspruch 4, wobei das Qualitätsmaß ein Maß der Wahrscheinlichkeit, dass eine gegebene Menge von Optimierungsparametern in dem Optimierungsbereich das wahre Signal repräsentiert, enthält.

**6.** Verfahren nach einem der Ansprüche 3 bis 5, wobei die Suche entsprechend einem numerischen Optimierungsalgorithmus ausgeführt wird.

**7.** Verfahren nach einem der vorhergehenden Ansprüche, wobei das Erzeugen einer Menge von Optimierungsparametern, die ein verbessertes Signal repräsentieren, das Berechnen wenigstens einer Schätzung der Menge von Optimierungsparametern, die die höchste Wahrscheinlichkeit dafür hat, dass sie in dem Optimierungsbereich der Kandidatenabbildung das wahre Signal repräsentiert, umfasst.

8. Verfahren nach einem der vorhergehenden Ansprüche, wobei das Berechnen eines Qualitätsindikators das Berechnen einer Bayes-Evidenzfunktion umfasst.

9. Verfahren nach Anspruch 8, wobei die Bayes-Evidenzfunktion wenigstens die Bayes-Evidenz des digitalen Eingangssignals schätzt, wenn eine bestimmte Kandidatenabbildung gegeben ist.

10. Verfahren nach Anspruch 9, wobei jedes Signal in dem Signalbereich einer Menge von Optimierungsparametern in dem Optimierungsbereich entspricht und
wobei die Bayes-Evidenzfunktion die Bayes-Evidenz schätzt oder berechnet unter Verwendung:
einer Wahrscheinlichkeitsfunktion, die die Wahrscheinlichkeit dafür beschreibt, dass das digitale Eingangssignal bei irgendeiner gegebenen bestimmten Menge von Werten für die Optimierungsparameter, wenn die bestimmte Kandidatenabbildung gegeben ist, erhalten wird; und
einer Funktion einer früheren Wahrscheinlichkeit, die die frühere Wahrscheinlichkeit des Auftretens irgendeiner bestimmten Menge von Werten für die Optimierungsparameter für die gegebene bestimmte Kandidatenabbildung beschreibt; wobei die Funktion der früheren Wahrscheinlichkeit eine frühere Kenntnis der Verteilung von Werten für die Optimierungsparameter vor der Analyse des digitalen Eingangssignals codifiziert.

11. Verfahren nach Anspruch 10, wobei die Bayes-Evidenzfunktion die Bayes-Evidenz durch Schätzen oder Berechnen des Integrals des Produkts der Wahrscheinlichkeitsfunktion und der Funktion der früheren Wahrscheinlichkeit über alle Mengen von Optimierungsparametern in dem Optimierungsbereich der Kandidatenabbildung schätzt oder berechnet.

12. Verfahren nach einem der vorhergehenden Ansprüche, wobei die mehreren Kandidatenabbildungen durch eine Menge aus einem oder mehreren Abbildungsparametern definiert sind; und wobei die Abbildung durch Optimieren des Qualitätsindikators oder der Bayes-Evidenzfunktion als Funktion der Abbildungsparameter ausgewählt wird.

13. Verfahren nach Anspruch 12, wobei die Abbildungsparameter diskret sind und als Etiketten für eine Menge von im Voraus definierten Abbildungen dienen.

14. Verfahren nach einem der vorhergehenden Ansprüche, wobei die Kandidatenabbildungen durch eine kontinuierlich parametrisierbare Abbildungsfunktion definiert sind.

15. Verfahren nach einem der vorhergehenden Ansprüche, wobei die Abbildung in dynamischer Abhängigkeit von dem Signal ausgewählt wird

16. Verfahren nach einem der vorhergehenden Ansprüche, wobei das digitale Eingangssignal ein Bild oder ein Teil eines Bildes ist und wobei die Abbildung in Abhängigkeit von dem Bild oder dem Teil ausgewählt wird.

17. Verfahren nach einem der vorhergehenden Ansprüche, wobei die Kandidatenabbildungen allgemeine nichtlineare Funktionen sind.

18. Verfahren nach einem der Ansprüche 1 bis 16, wobei die Kandidatenabbildungen lineare Funktionen sind.

19. Verfahren nach einem der vorhergehenden Ansprüche, wobei die Optimierungsparameter in dem Optimierungsbereich aus der Gruppe ausgewählt werden, die besteht aus Koeffizienten von Sinusfunktionen; Koeffizienten von Wavelet-Funktionen: Koeffizienten von Gauß-Funktionen; Koeffizienten von Haubenfunktionen ("top-hat"-Funktionen); Koeffizienten von Rauschabstand-Eigenfunktionen des Eingangssignals; und Koeffizienten von kontinuierlich parametrisierbaren Funktionen, die sich zwischen zwei oder mehr Standardformen kontinuierlich verändern.

20. Verfahren nach einem der vorhergehenden Ansprüche, wobei die Signalverarbeitungs- oder Signalverbesserungsoperation aus der Gruppe ausgewählt wird, die besteht aus einem Schärfen; einer Rauschreduzierung; einer Farbtonskaleneinstellung; einer Intensitätsgleichgewichtseinstellung; einer Farbgleichgewichtseinstellung; einer Farbneuabbildung; einer Entblockierung; und einer eine Interpolation verwendeten Bildvergrößerung.

21. Computerprogrammprodukt zum Ausführen einer Signalverarbeitungsoperation, das ein computernutzbares Medi-

um enthält, in dem ein Computerprogramm gespeichert ist, das dann, wenn es ausgeführt wird, einen Prozessor dazu veranlasst, ein Verfahren nach einem der vorhergehenden Ansprüche auszuführen.

**22.** Digitale Signalverarbeitungsvorrichtung, die dazu ausgelegt ist, ein Verfahren nach einem der Ansprüche 1 bis 20 auszuführen.

**23.** Digitale Signalverarbeitungsvorrichtung zum Verarbeiten eines digitalen Eingangssignals, die umfasst:

Mittel, um eine Abbildung (K(h; p)) zwischen dem Signalbereich (d) des digitalen Eingangssignals und einem alternativen Optimierungsbereich (h) in Abhängigkeit von dem digitalen Eingangssignal auszuwählen;
Mittel, um eine alternative Signaldarstellung aus dem digitalen Eingangssignal unter Verwendung der ausgewählten Abbildung abzuleiten; und
Mittel, um eine Signalverarbeitungsoperation an der alternativen Signaldarstellung auszuführen;

wobei die Auswahlmittel dazu ausgelegt sind, die Abbildung aus mehreren Kandidatenabbildungen unter Verwendung einer Abbildungsqualitätsfunktion (Q(p)), die eine Angabe der Qualität einer gegebenen Kandidatenabbildung bereitstellt, auszuwählen;
wobei die mehreren Kandidatenabbildungen durch eine kontinuierlich parametrisierbare Abbildungsfunktion einer Menge aus einem oder mehreren Abbildungsparametern definiert sind; und
wobei die Auswahlmittel dazu ausgelegt sind, die Abbildung durch Optimieren der Abbildungsqualitätsfunktion als eine Funktion der Abbildungsparameter auszuwählen.

**24.** Digitale Signalverarbeitungsvorrichtung nach Anspruch 23, wobei die Abbildungsqualitätsfunktion eine Bayes-Evidenzfunktion ist.

## Revendications

**1.** Procédé d'exécution d'une opération d'amélioration de signaux sur un signal d'entrée numérique, pour produire une meilleure estimation d'un signal réel que le signal d'entrée numérique est censé représenter, comprenant les étapes:

a) dériver une pluralité de mappages candidats (K(h;p)), chaque mappage candidat définissant un mappage entre le domaine de signaux (d) du signal d'entrée numérique et un domaine alternatif d'optimisation (h), chaque signal dans le domaine de signaux correspondant à un jeu de paramètres d'optimisation dans le domaine d'optimisation ;
b) pour chaque mappage candidat, calculer un indicateur de la qualité du mappage candidat (Q(p)), le calcul comprenant l'analyse d'une distribution, définie sur tous les jeux possibles de paramètres d'optimisation dans le domaine d'optimisation du mappage candidat, des probabilités que des jeux donnés de paramètres d'optimisation dans le domaine d'optimisation représentent le signal réel ; et générer un jeu de paramètres d'optimisation dans le domaine d'optimisation du mappage candidat, le jeu de paramètres d'optimisation représentant un signal amélioré dans ce domaine ;
c) sélectionner le mappage de meilleure qualité en fonction des indicateurs calculés ;
d) sélectionner le jeu de paramètres d'optimisation ($\hat{h}$) généré pour le mappage sélectionné ; et
e) appliquer le jeu de paramètres d'optimisation sélectionné pour produire un signal numérique amélioré dans le domaine de signaux.

**2.** Procédé selon la revendication 1, dans lequel le calcul de l'indicateur de qualité dépend de la génération du jeu de paramètres d'optimisation représentant un signal amélioré.

**3.** Procédé selon la revendication 1 ou 2, dans lequel la génération d'un jeu de paramètres d'optimisation représentant un signal amélioré dans le domaine d'optimisation d'un mappage candidat donné comprend l'exécution d'une recherche à travers l'espace des jeux possibles de paramètres d'optimisation dans ce domaine.

**4.** Procédé selon la revendication 3, dans lequel l'exécution d'une recherche comprend l'optimisation du jeu de paramètres d'optimisation par rapport à une mesure de qualité indiquant la qualité d'un signal amélioré représenté par n'importe quel jeu donné de paramètres d'optimisation.

**5.** Procédé selon la revendication 4, dans lequel la mesure de qualité comprend une mesure de la probabilité qu'un jeu donné de paramètres d'optimisation représente, dans le domaine d'optimisation, le signal réel.

**6.** Procédé selon l'une quelconque des revendications 3 à 5, dans lequel la recherche est effectuée conformément à un algorithme d'optimisation numérique.

**7.** Procédé selon l'une quelconque des revendications précédentes, dans lequel la génération d'un jeu de paramètres d'optimisation représentant un signal amélioré comprend le calcul d'au moins une estimation du jeu de paramètres d'optimisation ayant la plus grande probabilité de représenter, dans le domaine d'optimisation du mappage candidat, le signal réel.

**8.** Procédé selon l'une quelconque des revendications précédentes, dans lequel le calcul d'un indicateur de qualité comprend le calcul d'une fonction d'évidence bayésienne.

**9.** Procédé selon la revendication 8, dans lequel la fonction d'évidence bayésienne estime au moins l'évidence bayésienne du signal d'entrée numérique étant donné un mappage candidat particulier.

**10.** Procédé selon la revendication 9, dans lequel chaque signal dans le domaine de signaux correspond à un jeu de paramètres d'optimisation dans le domaine d'optimisation, et dans lequel la fonction d'évidence bayésienne estime ou calcule l'évidence bayésienne en utilisant :

une fonction de vraisemblance décrivant la probabilité d'obtenir le signal d'entrée numérique étant donné n'importe quel jeu particulier de valeurs pour les paramètres d'optimisation, étant donné le mappage candidat particulier ; et
une fonction de probabilité antérieure décrivant la probabilité antérieure de l'occurrence de n'importe quel jeu particulier de valeurs pour les paramètres d'optimisation, étant donné le mappage candidat particulier ; la fonction de probabilité antérieure codifiant la connaissance antérieure de la distribution de valeurs pour les paramètres d'optimisation avant l'analyse du signal d'entrée numérique.

**11.** Procédé selon la revendication 10, dans lequel la fonction d'évidence bayésienne estime ou calcule l'évidence bayésienne en estimant ou en calculant l'intégrale du produit de la fonction de vraisemblance et de la fonction de probabilité antérieure sur tous les jeux de paramètres d'optimisation dans le domaine d'optimisation du mappage candidat.

**12.** Procédé selon l'une quelconque des revendications précédentes, dans lequel la pluralité des mappages candidats est définie par un jeu d'un ou de plusieurs paramètres de mappage ; et dans lequel le mappage est sélectionné en optimisant l'indicateur de qualité de la fonction d'évidence bayésienne comme fonction des paramètres de mappage.

**13.** Procédé selon la revendication 12, dans lequel les paramètres de mappage sont discrets et agissent comme des étiquettes pour un jeu de mappage prédéfinis.

**14.** Procédé selon l'une quelconque des revendications précédentes, dans lequel les mappages candidats sont définis par une fonction de mappage continuellement paramétrisable.

**15.** Procédé selon l'une quelconque des revendications précédentes, dans lequel le mappage est sélectionné en dépendance dynamique par rapport au signal.

**16.** Procédé selon l'une quelconque des revendications précédentes, dans lequel le signal d'entrée numérique est une image ou une partie d'une image, et dans lequel le mappage est sélectionné en dépendance par rapport à l'image ou la partie.

**17.** Procédé selon l'une quelconque des revendications précédentes, dans lequel les mappages candidats sont des fonctions générales non linéaires.

**18.** Procédé selon l'une quelconque des revendications 1 à 16, dans lequel les mappages candidats sont des fonctions linéaires.

**19.** Procédé selon l'une quelconque des revendications précédentes, dans lequel les paramètres d'optimisation dans le domaine d'optimisation sont choisis dans le groupe comprenant : des coefficients de fonctions sinusoïdales ; des coefficients de fonctions ondelettes ; des coefficients de fonctions gaussiennes ; des coefficients de fonctions top-hat ; des coefficients de fonctions propres de signal à bruit du signal d'entrée ; et des coefficients de fonctions continuellement paramétrisables qui varient continuellement entre deux ou plusieurs formes standard.

20. Procédé selon l'une quelconque des revendications précédentes, dans lequel l'opération de traitement ou d'amélioration de signaux est choisie dans le groupe comprenant : l'accentuation ; l'atténuation du bruit ; le réglage de l'échelle de tons ; l'ajustement de l'équilibre d'intensité ; le réglage d'équilibrage des couleurs ; le remappage des couleurs ; le dégroupage ; et l'agrandissement des images utilisant l'interpolation.

21. Produit de programmation informatique conçu pour exécuter une opération de traitement de signaux, comprenant un support utilisable par ordinateur stockant un programme informatique lequel, quand il est exécuté, entraîne un processeur à exécuter un procédé selon l'une quelconque des revendications précédentes.

22. Appareil de traitement de signaux numériques adapté pour exécuter un procédé selon l'une quelconque des revendications 1 à 20.

23. Appareil de traitement de signaux numériques conçu pour traiter un signal d'entrée numérique, comprenant :

   des moyens de sélection d'un mappage (K(h;p)) entre le domaine de signaux (d) du signal d'entrée numérique et un domaine alternatif d'optimisation (h) en fonction du signal d'entrée numérique ;
   des moyens de dérivation d'une représentation alternative de signal à partir du signal d'entrée numérique en utilisant le mappage sélectionné ; et
   des moyens d'exécution d'une opération de traitement de signaux sur la représentation alternative de signal ;
   dans lequel les moyens de sélection sont adaptés pour sélectionner le mappage à partir d'une pluralité de mappages candidats en utilisant une fonction de qualité de mappage (Q(p)) qui fournit une indication de la qualité d'un mappage candidat donné ;
   dans lequel la pluralité de mappages candidats est définie par une fonction de mappage continuellement paramétrisable d'un jeu d'un ou plusieurs paramètres de mappage ; et
   dans lequel les moyens de sélection sont adaptés pour sélectionner le mappage en optimisant la fonction de qualité de mappage en tant que fonction des paramètres de mappage.

24. Appareil de traitement de signaux numériques selon la revendication 23, dans lequel la fonction de qualité de mappage est une fonction d'évidence bayésienne.

```
                          ┌────────────────────────┐
                          │   INPUT DIGITAL SIGNAL  │
                          └────────────────────────┘
                                      │
                                      ▼
┌──────────────────────┐  ┌────────────────────────┐  ┌────────────────────────────┐
│                      │  │    SELECT A MAPPING     │  │  MAPPING SELECTION BASED   │
│  MAPPING OPERATIONS  │─▶│   FROM OPTIMISATION     │◀─│  ON VALUE AND DERIVATIVES  │
│                      │  │    PARAMETERS TO        │  │ OF MAPPING QUALITY FUNCTION│
│                      │  │    SIGNAL-SPACE         │  │                            │
└──────────────────────┘  └────────────────────────┘  └────────────────────────────┘
                                      │                              ▲
                                      ▼                              │
                          ┌────────────────────────┐                │
                          │   EVALUATE MAPPING      │────────────────┘
                          │   QUALITY FUNCTION      │
                          └────────────────────────┘
                                      │
                                      ▼
                          ┌────────────────────────┐
                          │  SELECT MAPPING WHICH   │
                          │  MAXIMISES THE MAPPING  │
                          │   QUALITY FUNCTION      │
                          └────────────────────────┘
                                      │
                                      ▼
┌──────────────────────┐  ┌────────────────────────┐
│ SIGNAL ENHANCEMENT   │─▶│    SELECT A SIGNAL      │
│    OPERATIONS        │  │ ENHANCEMENT OPERATION   │
└──────────────────────┘  └────────────────────────┘
                                      │
                                      ▼
                          ┌────────────────────────┐
                          │  APPLY SELECTED SIGNAL  │
                          │ ENHANCEMENT OPERATION   │
                          │ USING SELECTED MAPPING  │
                          └────────────────────────┘
                                      │
                                      ▼
                          ┌────────────────────────┐
                          │ ENHANCED DIGITAL SIGNAL │
                          └────────────────────────┘
```

Figure 1:

INPUT DIGITAL IMAGE

LIBRARY OF ORTHOGONAL WAVELET TRANSFORMS → SELECT AN INVERSE WAVELET TRANSFORM FROM OPTIMISATION PARAMETERS TO SIGNAL–SPACE

LIBRARY OF NUMERICAL OPTIMISERS → NUMERICALLY MAXIMISE JOINT PROBABILITY DISTRIBUTION

NUMERICAL ALGORITHMS FOR DIFFERENTIATION → CALCULATE CURVATURE MATRIX AT MAXIMUM POINT

NUMERICAL ALGORITHMS FOR EVALUATION OF DETERMINANTS → CALCULATE GAUSSIAN APPROXIMATION TO EVIDENCE

SELECT INVERSE WAVELET TRANSFORM THAT MAXIMISES EVIDENCE

APPLY SELECTED INVERSE WAVELET TRANSFORM TO CORRESPONDING MAXIMAL OPTIMISATION PARAMETERS

ENHANCED DIGITAL IMAGE

Figure 2:

17

Figure 3

EP 1 687 774 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TITTERINGTON D. M.** *Astronomy & Astrophysics,* 1985, vol. 144, 381
- **GULL S.F.** Maximum Entropy and Bayesian Methods: Developments in Maximum Entropy Data Analysis. 1989, 53-71
- **WEIR N.** Astronomical Data Analysis Software and Systems I. *ASP Conf. Ser. 25,* 1992, vol. 1, 186
- **BONTEKOE T.R. ; KOPER E. ; KESTER D.J.M.** *Astronomy & Astrophysics,* 1994, vol. 284, 1037
- Combining cosmological data sets: hyperparameters and Bayesian evidence. **HOBSON M.P. et al.** Monthly Notices of the Royal Astronomical Society, UK. 11 September 2002, vol. 335, 377-388
- **GILKS et al.** Markov Chain Monte-Carlo in Practice. Chapman and Hall, 1995
- **HOBSON.** *Monthly Notices of the Royal Astronomical Society,* 2002, vol. 335, 377